# EUROPEAN PATENT APPLICATION

(11) **EP 4 456 282 A1**
(43) Date of publication of application: **30.10.2024**
(21) Application number: 22912006.8
(22) Date of filing: 23.12.2022
(51) Int. Cl.: H01M 50/195, H01M 50/198, H01M 50/186, H01M 50/152

(54) **GASKET, SECONDARY BATTERY CAP ASSEMBLY COMPRISING SAME, AND SECONDARY BATTERY COMPRISING SAME**

(30) Priority: 23.12.2021 KR 20210185869
(71) Applicant: LG Energy Solution, Ltd., Seoul 07335 (KR)
(72) Inventor: LEE, Joonghoon, Daejeon 34122 (KR); KIM, Eun Young, Daejeon 34122 (KR); BOK, Cheon Hee, Daejeon 34122 (KR); SUNG, Joo Hwan, Daejeon 34122 (KR); HAN, In Kee, Daejeon 34122 (KR)
(74) Representative: Goddar, Heinz J.
(86) International application number: PCT/KR2022/021140
(87) International publication number: WO 2023/121373

(57) **Abstract**

The present invention relates to a gasket comprising a polybutylene terephthalate resin, wherein the polybutylene terephthalate resin has a melt flow index of 35 g/10 min to 60 g/10 min.

## Description

### [Technical Field]

The present invention relates to a gasket, a cap assembly for a secondary battery including the gasket, and a secondary battery including the cap assembly.

The present application claims priority to and the benefit of Korean Patent Application No. 10-2021-0185869 filed in the Korean Intellectual Property Office on December 23, 2021, the entire contents of which are incorporated herein by reference.

### [Background Art]

Depending on a shape of a battery case, a secondary battery is classified into a cylindrical secondary battery or prismatic secondary battery in which an electrode assembly is embedded in a cylindrical or prismatic metal can, and a pouch-type secondary battery in which an electrode assembly is embedded in a pouch-type case made of an aluminum laminate sheet. The cylindrical secondary battery has the advantage of relatively large capacity and structural stability.

The cylindrical secondary battery seals off the outside and inside of the cylindrical secondary battery by placing and sealing a cap assembly on top of the open cylindrical case. A gasket constituting the cap assembly also has a function of ensuring insulation between a top cap connected to a positive electrode tab of the electrode assembly and a cylindrical case connected to a negative electrode tab.

The cap assembly for a cylindrical secondary battery is configured by a top cap, a safety vent, a crimping gasket, a current interrupt member, and a lower gasket. Due to deformation of the cap assembly during an external impact, the safety vent is also deformed, which causes the secondary battery to easily short-circuit. In addition, there is a problem that the gasket melts in a high-temperature environment, and thus, an electrode terminal short-circuits.

Therefore, there is a high need for a cylindrical secondary battery that can prevent short circuits from external impacts, high-temperature environments, or the like.

### [Detailed Description of the Invention]

### [Technical Problem]

The present invention relates to a gasket having excellent heat resistance and strength, a cap assembly for a secondary battery including the gasket, and a secondary battery including the cap assembly.

### [Technical Solution]

An exemplary embodiment of the present invention provides a gasket including a polybutylene terephthalate resin, wherein the polybutylene terephthalate resin has a melt flow rate of 35 g/10min to 60 g/10min.

An exemplary embodiment of the present invention provides a cap assembly for a secondary battery adapted to be coupled to an opening portion of a can configured to accommodate an electrode assembly, the cap assembly including: a top cap positioned in the opening portion; a safety vent arranged below the top cap and surrounding an outer periphery of the top cap; and the gasket positioned on an outer periphery of the safety vent.

An exemplary embodiment of the present invention provides a secondary battery including an electrode assembly in such a form that a separator is arranged between a positive electrode and a negative electrode and the positive and negative electrodes and the separator are wound; a can configured to accommodate the electrode assembly; and the cap assembly coupled to an opening portion of the can.

### [Advantageous Effects]

The gasket material according to an exemplary embodiment of the present invention includes a polybutylene terephthalate resin with a melt flow rate of 35 g/10 min to 60 g/10 min, whereby excellent molding processability, tensile strength, IZOD impact strength, and/or heat distortion temperature can be exhibited.

### [Brief Description of Drawings]

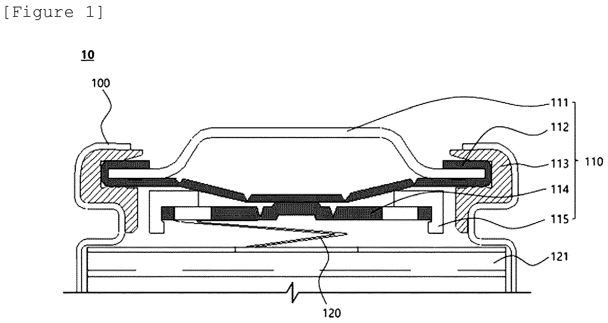

FIG. 1 is a vertical cross-sectional view of an opening portion of a cylindrical secondary battery including a cap assembly according to an exemplary embodiment of the present invention.

### <Explanation of Reference Numerals and Symbols>

- 10:: Secondary battery
- 100:: Can
- 110:: Cap assembly
- 111:: Top cap
- 112:: Safety vent
- 113:: Crimping gasket
- 114:: Current interrupt member
- 115:: Lower gasket
- 120:: Positive electrode tab
- 121:: Electrode assembly

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

In the present specification, the weight average molecular weight and the number average molecular weight of the resin may be measured by gel permeation chromatography (GPC) using a polystyrene (PS) standard with Agilent 1200 series.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

Hereinafter, preferred embodiments of the present invention will be described in detail. However, it should be understood that the embodiments of the present invention may be modified in various forms and the scope of the present invention is not limited to the embodiments described below.

An exemplary embodiment of the present invention provides a gasket including a polybutylene terephthalate resin, wherein the polybutylene terephthalate resin has a melt flow rate of 35 g/10min to 60 g/10min.

Recently, cylindrical batteries have become an issue due to ignition or explosion in high-temperature environments. Gaskets used in general cylindrical cap assemblies are manufactured using polybutylene terephthalate resin, which has excellent insulating properties. The heat resistance and strength of gaskets manufactured in this way are somewhat reduced, so when the temperature of the cylindrical battery rises, the gasket melts, causing a problem that the positive electrode and negative electrode terminals easily short-circuit.

On the other hand, the gasket according to the present invention includes polybutylene terephthalate resin with a melt flow rate within a specific range, so even when the temperature of the cylindrical battery rises, the excellent heat resistance and strength of the gasket prevent melting of the gasket even in high-temperature environments and prevent deformation of the gasket due to an external impact.

In an exemplary embodiment, the polybutylene terephthalate resin is a polyester resin obtained by polycondensation of terephthalic acid and 1,4-butanediol. Polybutylene terephthalate resin is produced by transesterification of dimethyl terephthalate and 1,4-butanediol (excess) by heating, or by a dehydrochlorination reaction of terephthalic acid dichloride and 1,4-butanediol. According to one example, the melting point of the polybutylene terephthalate resin is 220°C or higher.

In an exemplary embodiment of the present invention, the gasket further includes glass fiber, and the glass fiber is included in an amount of 15 to 50 parts by weight based on a total of 100 parts by weight of the polybutylene terephthalate resin. Specifically, the glass fiber may be included in an amount of 15 to 45 parts by weight or 15 to 40 parts by weight, and more specifically 15 to 30 parts by weight on the basis of a total of 100 parts by weight of the polybutylene terephthalate resin.

The upper limit of the content of the glass fiber may be 50 parts by weight, 45 parts by weight, 40 parts by weight, 35 parts by weight or 30 parts by weight, and the lower limit may be 15 parts by weight, 20 parts by weight or 25 parts by weight.

Glass fiber is generally made by melting and processing glass containing silicate as a main component into a fiber shape. The smaller the diameter and the longer the length, the better the physical properties. When the glass fiber as described above is mixed with polymer, the glass fiber can have excellent mechanical, chemical, and electrical properties. Specifically, by mixing glass fiber with polymer, tensile strength, impact strength, and thermal stability can be improved.

In an exemplary embodiment of the present invention, when the glass fiber is included in an amount of 15 parts by weight or more based on a total of 100 parts by weight of the polybutylene terephthalate resin, the tensile strength, impact strength, and thermal stability of the gasket can be sufficiently improved. As a result, melting of the gasket can be prevented in harsh high-temperature environments or during safety evaluation.

In an exemplary embodiment of the present invention, when the glass fiber is included in an amount of 50 parts by weight or less based on a total of 100 parts by weight of the polybutylene terephthalate resin, it is advantageous for uniform dispersion of the glass fiber and is also advantageous for the production of gaskets because the moldability of the composite resin is prevented from being reduced.

When the contents of polybutylene terephthalate resin and glass fiber included in the gasket satisfy the above ranges, the tensile strength, impact strength, and heat distortion temperature of the gasket material are significantly improved.

On the other hand, if the gasket is manufactured using polypropylene, polyethylene, or polyimide instead of the polybutylene terephthalate resin, the insulating property and heat resistance are deteriorated, and there is a problem in terms of cost.

The polybutylene terephthalate resin has a melt flow rate of 35 g/10min to 60 g/10min. Specifically, the melt flow rate may be 40 g/10min to 60 g/10min or 40 g/10min to 50 g/10min. When a resin whose melt flow rate satisfies the above range is used, molding processability is excellent in manufacturing a gasket even if an excessive amount of glass fiber is added, the problem of deterioration in elasticity of the gasket material can be prevented, and the tensile strength, the impact strength, the heat distortion temperature, and the molding processability can be improved. In addition, at the same glass fiber content, the melt flow rate of polybutylene terephthalate resin should be higher to improve the moldability and heat resistance. On the other hand, in a case where a resin whose melt flow rate is below the above range is used, uniform mixing is difficult when adding an excessive amount of glass fiber in order to increase strength and heat resistance, making processing difficult during molding and reducing the elasticity of the gasket.

In the present invention, the melt flow rate (MFR) of polybutylene terephthalate resin may be measured using an amount (g) of resin released for 10 minutes using a weight with a load of 2.16 Kg under temperature conditions of 250°C according to ASTM D1238.

In an exemplary embodiment of the present invention, the polybutylene terephthalate resin may be a mixture of two or more types of polybutylene terephthalate resins with different weight average molecular weights or melt flow rates. By using a mixture of polybutylene terephthalate resins with different weight average molecular weights or melt flow rates, it is possible to easily adjust the resin composition to have the desired moldability and to prevent the problem of the elasticity of the gasket material being deteriorated when glass fiber is added.

The polybutylene terephthalate resin may be a mixture of a first polybutylene terephthalate resin with a melt flow rate of 30 g/10min to 40 g/10min and a second polybutylene terephthalate resin with a melt flow rate of 70 g/10min to 80 g/10min.

Specifically, the polybutylene terephthalate resin may be a mixture of a first polybutylene terephthalate resin with a melt flow rate of 30 g/10min to 35 g/10min and a second polybutylene terephthalate resin with a melt flow rate of 73 g/10min to 78 g/10min, and more specifically, a mixture of a first polybutylene terephthalate resin with a melt flow rate of 33 g/10min and a second polybutylene terephthalate resin with a melt flow rate of 75 g/10min.

As described above, when polybutylene terephthalate resin (second polybutylene terephthalate resin) having high flow characteristics with a melt flow rate (MFR) value of 70 g/10 min or greater is mixed, the molding processability of the gasket is excellent even when an excessive amount of glass fiber is added, the problem of deterioration in the elasticity of the gasket material can be prevented, and the tensile strength, impact strength, and heat distortion temperature can be improved.

In an exemplary embodiment of the present invention, the second polybutylene terephthalate resin may be included in an amount of 10 to 50 parts by weight based on 100 parts by weight of the total polybutylene terephthalate resin. Specifically, the second polybutylene terephthalate resin may be included in an amount of 10 to 40 parts by weight, and more specifically, 10 to 30 parts by weight.

In an exemplary embodiment of the present invention, a weight ratio of the first polybutylene terephthalate resin: the second polybutylene terephthalate resin may be 50:50 to 90:10. Specifically, the weight ratio may be 60:40 to 80:20 or 65:35 to 75:35, and more specifically 70:30. When the above content is satisfied, the gasket has excellent molding processability and elasticity while maintaining the strength and heat resistance of the gasket.

In the present invention, the specific gravity refers to a ratio of a density of a material and the density of water at 4°C. The specific gravity may be measured according to the ASTM D792.

In an exemplary embodiment of the present invention, the specific gravity of the gasket may be 1.4 or greater. Specifically, the specific gravity of the gasket may be 1.4 to 1.7 or 1.4 to 1.65, and more specifically, 1.41 to 1.62 or 1.42 to 1.62.

In the present invention, the tensile strength is force representing strength of a material, and refers to a value obtained by dividing the maximum load that can be endured when the material is pulled to be cut by a cross-sectional area of the material. The tensile strength may be measured according to the ASTM D638.

In an exemplary embodiment of the present invention, the tensile strength of the gasket may be 900 kgf/cm² or higher. Specifically, the tensile strength of the gasket may be 900 Kgf/cm² to 1,500 Kgf/cm², and more specifically, 950 Kgf/cm² to 1,350 kgf/cm² or 1,000 kgf/cm² to 1,350 kgf/cm². The lower limit of the tensile strength may be 900 Kgf/cm², 950 kgf/cm², 980 kgf/cm² or 1,000 kgf/cm².

In the present invention, IZOD impact strength refers to the strength of resistance when a material is impacted. The IZOD impact strength may be measured according to ASTM D256.

In an exemplary embodiment of the present invention, the IZOD impact strength of the gasket may be 4.0 Kg·cm/cm or higher. Specifically, the IZOD impact strength of the gasket may be 4.0 Kg·cm/cm to 8.0 Kg·cm/cm, and more specifically, 4.5 Kg·cm/cm to 7.0 Kg·cm/cm. The lower limit of the impact strength may be 4.0 Kg·cm/cm, 4.1 Kg·cm/cm, 4.2 Kg·cm/cm, 4.3 Kg·cm/cm, 4.4 Kg·cm/cm or 4.5 Kg-cm/cm.

In the present invention, the heat distortion temperature is a temperature at which deformation occurs due to an increase in temperature when a certain load is applied to a resin. The heat distortion temperature may be measured according to ASTM D648.

In an exemplary embodiment of the present invention, the heat distortion temperature of the gasket may be 200°C or higher. Specifically, the heat distortion temperature of the gasket may be 200°C to 250°C, and more specifically, 204°C to 210°C or 205°C to 210°C. The lower limit of the heat distortion temperature may be 200°C, 201°C, 202°C, 203°C, 204°C, or 205°C.

In the case of a gasket that satisfies the above range, the gasket has excellent heat resistance, tensile strength, and impact strength, so melting of the gasket can be prevented even in environments where the cell temperature rises, such as cell impact, external short circuit, or overcharging, so that short circuits of the positive electrode and negative electrode terminals are suppressed, leading to improvement in stability in high temperature environments.

In an exemplary embodiment of the present invention, the gasket may be formed by curing a composition including a polybutylene terephthalate resin and a glass fiber.

In an exemplary embodiment of the present invention, the gasket may be manufactured using an injection molding process, but is not limited thereto, and may be manufactured by appropriately employing methods known in the art.

In an exemplary embodiment of the present invention, the gasket may be a crimping gasket. The crimping gasket may be positioned on an outer periphery of a safety vent included in the cap assembly for a secondary battery and may serve to seal the secondary battery while being in close contact with an opening portion of the cylindrical can.

Another exemplary embodiment of the present invention provides a cap assembly for a secondary battery including the gasket.

Specifically, the cap assembly for a secondary battery is coupled to an opening portion of a can configured to accommodate an electrode assembly, and includes a top cap positioned in the opening portion, a safety vent arranged below the top cap and surrounding an outer periphery of the top cap, and the aforementioned gasket positioned on an outer periphery of the safety vent.

In an exemplary embodiment of the present invention, the gasket positioned on the outer periphery of the safety vent may be a crimping gasket. The crimping gasket may be positioned on the outer periphery of the safety vent and may serve to seal the secondary battery while being in close contact with the opening portion of the cylindrical can.

The gasket according to an exemplary embodiment of the present invention may be a crimping gasket, and the crimping gasket has higher heat resistance characteristics than a lower gasket positioned on an outer periphery of a current interrupt member to be described below for stability of the battery. That is, the heat distortion temperature of the lower gasket, which will be described below, may be lower than the heat distortion temperature of the gasket.

The current interrupt member should operate before an abnormal situation such as thermal runaway occurs in the battery, and even when thermal runaway occurs and thus the lower gasket is melted by heat generated inside the battery, the crimping gasket should maintain the shape thereof without melting.

In this case, in order to increase the heat resistance of the gasket, it is effective to increase a ratio of the glass fiber. However, if the ratio of the glass fiber is too high, the moldability deteriorates. In order to improve this, the gasket of the present invention satisfies the aforementioned ratio of the glass fiber and melt flow rate range of the polybutylene terephthalate resin, thereby improving the heat resistance characteristics and moldability of the gasket.

An exemplary embodiment of the present invention provides a secondary battery including an electrode assembly in such a form that a separator is arranged between a positive electrode and a negative electrode and the positive and negative electrodes and the separator are wound; a can configured to accommodate the electrode assembly; and the cap assembly coupled to an opening portion of the can.

FIG. 1 is a vertical cross-sectional view of an opening portion of a cylindrical secondary battery 10 including a cap assembly 110 according to an exemplary embodiment of the present invention. Below, the cap assembly 110 according to an exemplary embodiment of the present invention and the secondary battery 10 including the same will be specifically described.

Specifically, the secondary battery 10 may have such a form that an electrode assembly 121 is accommodated inside a can 100 and a positive electrode tab 120 is arranged on one surface of the electrode assembly 121. A side opposite to a side of the positive electrode tab 120 on which the electrode assembly 121 is arranged is an opening portion, and specifically, the cap assembly 110 according to an exemplary embodiment of the present invention may be coupled to the opening portion of the can 100.

The electrode assembly 121 accommodated in the can 100 may be in such a form that a separator is arranged between a positive electrode and a negative electrode and the positive and negative electrodes and the separator are wound. Specifically, the stack structure may be wound in a 'jelly-roll' form, or may be in such a form that positive and negative electrode plates of a certain standard are stacked with a separator interposed therebetween.

The can 100 is made of a lightweight conductive metal material such as aluminum or aluminum alloy, and may have a cylindrical structure with an opening portion at the top and a sealed bottom opposite to the opening portion. The electrode assembly 121 and an electrolyte solution are accommodated in an internal space of the can 100.

The electrolyte solution filled in the can 100 is to migrate lithium ions generated by an electrochemical reaction of an electrode plate during charging and discharging of the secondary battery, and may include a non-aqueous organic electrolyte solution that is a mixture of a lithium salt and a high-purity organic solvent; alternatively, a polymer using a polymer electrolyte.

A center pin that prevents the electrode assembly wound in a jelly-roll form from being unwound and serves as a passage for gas inside the secondary battery may be inserted in the center of the can 100. An upper portion of the circular can 100, that is, an upper portion of the top of the electrode assembly is provided with a beading portion formed by press-bending from the outside toward the inside, making it possible to prevent upward and downward movement of the electrode assembly.

The cap assembly 110 is assembled to the opening portion of the can 100 and serves to seal the opening portion of the can 100. In addition, the cap assembly may include a top cap 111 forming a positive electrode terminal; a safety vent 112 arranged below the top cap and surrounding an outer periphery of the top cap; a crimping gasket 113 positioned on an outer periphery of the safety vent 112 and serving to seal the secondary battery while being in close contact with the opening portion of the can 100; a current interrupt member 114 electrically connected to the electrode assembly 121; and a lower gasket 115 positioned below the safety vent 112 and on an outer periphery of the current interrupt member 114.

Specifically, the top cap 111 has a central portion protruding upward and may form a positive electrode terminal.

The safety vent 112 may have a downwardly concave shape and may include a plurality of notches. In addition, the safety vent 112 is bent to surround the outer periphery of the top cap 111, and the downwardly concave portion of the safety vent 112 may be connected to the current interrupt member 114. In this case, a portion where the safety vent 112 is connected to the current interrupt member 114 may be referred to as a connection portion.

The safety vent 112 is connected to the current interrupt member 114 through the connection portion to electrically connect the current interrupt member 114 and the top cap 111, and when gas is generated inside the can 100 due to an abnormal current and an internal pressure rises, the connection portion may rupture while protruding upward at a predetermined pressure, discharging the internal gas to the outside and interrupting the flow of current.

The safety vent 112 may be made of a metal material, and a thickness of the safety vent may vary depending on the material, structure, and the like. The safety vent is not particularly limited as long as it ruptures and discharge gas and the like when a predetermined high pressure is generated inside the battery.

The crimping gasket 113 is positioned on the outer periphery of the safety vent 112 and may serve to seal the secondary battery while being in close contact with the opening portion of the can 100. The description of the gasket described above applies to the crimping gasket 113. The crimping gasket 113 having the aforementioned configuration has improved tensile strength and impact strength and is not easily destroyed by external impact. In addition, the crimping gasket has excellent heat resistance, which prevents melting of the crimping gasket in a cell temperature rising environment or high temperature environment due to an external short-circuit, an overcharging, or the like, making it possible to prevent a short-circuit of the positive electrode or negative electrode to improve the stability of the battery.

The current interrupt member 114 may be positioned in a space between the safety vent 112 and the electrode assembly 121. The current interrupt member 114 may be connected to the safety vent 112 via the connection portion, and serves to interrupt current and relieve an internal pressure when the cylindrical secondary battery operates abnormally.

The lower gasket 115 may be positioned below the safety vent 112 and on the outer periphery of the current interrupt member 114, and may prevent the safety vent 112 and the current interrupt member 114 from coming into contact with each other at a portion other than the connection portion.
In an exemplary embodiment of the present invention, the heat distortion temperature of the lower gasket 115 may be 150°C or lower.

In an exemplary embodiment of the present invention, the secondary battery may be cylindrical, prismatic, or the like, and specifically, may be cylindrical. When the secondary battery is cylindrical, the top opening portion of the can may also be circular.

In an exemplary embodiment of the present invention, the secondary battery is a cylindrical secondary battery.

The secondary battery including the cap assembly may be used as a power source for a mobile phone, a laptop computer, or the like that stably provides a constant output.

Still another exemplary embodiment of the present invention provides a battery module including the secondary battery as a unit cell, and a battery pack including the battery module. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

### Mode for Invention

Hereinafter, Examples will be described in detail to specifically describe the present specification. However, the Examples according to the present specification may be modified in other forms, and the scope of the present application is not construed as being limited to the following Examples. The Examples of the present application are provided to more completely explain the present specification to one skilled in the art.

### Example 1

A gasket was prepared using a resin composition obtained by mixing 100 parts of weight of polybutylene terephthalate resin, which was obtained by mixing polybutylene terephthalate resin (PBT, LG Chemical, LUPOX GP1000S) with a melt flow rate of 33 g/10min and polybutylene terephthalate resin (LG Chemical, LUPOX HF1000) with a melt flow rate of 75 g/10min at 70:30(weight ratio), and 30 parts by weight of glass fiber (KCC, CS321).

The melt flow rate of the polybutylene terephthalate resin obtained by mixing the two types of resins was 45 g/10 min.

### Example 2

A gasket was prepared in the same manner as in Example 1, except that the amount of glass fiber was changed to 15 parts by weight.

### Comparative Example 1

A gasket was prepared in the same manner as in Example 1, except that 100 parts by weight of a polybutylene terephthalate resin with a melt flow rate of 33 g/10 min was used and glass fiber was not included.

### Comparative Example 2

A gasket was prepared in the same manner as in Example 1, except that 100 parts by weight of a polybutylene terephthalate resin with a melt flow rate of 33 g/10 min was used and the amount of the glass fiber was changed to 10 parts by weight.

### Comparative Example 3

A gasket was prepared in the same manner as in Example 1, except that 100 parts by weight of a polybutylene terephthalate resin with a melt flow rate of 33 g/10 min was used.

### Comparative Example 4

A gasket was prepared in the same manner as in Example 1, except that 100 parts by weight of a polybutylene terephthalate resin with a melt flow rate of 92 g/10 min was used.

### Experimental Examples: Evaluation of gaskets

The melt flow rate (MFR) of the polybutylene terephthalate resin was measured using an amount (g) of resin released for 10 minutes using a weight with a load of 2.16 Kg under a temperature condition of 250°C according to ASTM D1238.

The tensile strength of the gasket was measured according to ASTM D638.

The IZOD impact strength of the gasket was measured according to ASTM D256.

The heat distortion temperature of the gasket was measured under a load condition of 18.6 Kg according to ASTM D648.

The specific gravity of the gasket was measured according to ASTM D792.

In Table 1 below, the molding processability was evaluated as O for the case where there was no problem in processing the gasket into a desired shape, and △ for the case where the gasket was molded although it was not processed into a desired shape, and X for the case where a gasket could not be molded.

The measurement results are shown in Table 1 below.

**Table 1**

| | Melt flow rate (g/10min) of PBT | Parts by weight of glass fiber (GF) (with respect to 100 parts by weight of PBT) | Specific gravity (g/cm³) | Tensile strength (kgf/cm³) | IZOD impact strength (Kg·cm/cm) | Heat distortion temperature (°C) | Molding processability |
|---|---|---|---|---|---|---|---|
| Example 1 | 45 | 30 | 1.62 | 1,350 | 7.0 | 210 | ○ |
| Example 2 | 45 | 15 | 1.42 | 1,000 | 4.5 | 2-5 | ○ |
| Comparative Example 1 | 33 | 0 | 1.31 | 600 | 3.7 | 64 | ○ |
| Comparative Example 2 | 33 | 10 | 1.36 | 800 | 4.0 | 198 | △ |
| Comparative Example 3 | 33 | 30 | - | - | - | - | × |
| Comparative Example 4 | 92 | 30 | - | - | - | - | × |

Seeing Table 1, it could be confirmed that the gasket according to an exemplary embodiment of the present invention showed more excellent characteristics of tensile strength, impact strength, heat distortion temperature, and molding processability than Comparative Examples 1 to 4 using polybutylene terephthalate resins with melt flow rates different from that of the present invention, making it possible to effectively prevent melting of the gasket even in environments where the cell temperature rises, such as cell impact, external short-circuit, and overcharging.

In addition, it could be confirmed that the gaskets of the Examples had the melt flow rate of 35 g/10 min or greater of polybutylene terephthalate resin and showed excellent molding processability because the glass fiber was uniformly mixed even when it was added in an amount of 15 parts by weight or more.

In Comparative Example 3, the melt flow rate of the polybutylene terephthalate resin was low, the glass fiber was not mixed uniformly, and thus the molding processability was poor, making it impossible to prepare a gasket. In Comparative Example 4, the melt flow rate of the polybutylene terephthalate resin was too high and the molding processability was poor, making it impossible to prepare a gasket. Accordingly, in Comparative Examples 3 and 4, the gasket could not be prepared and thus the gasket could not be evaluated.

Although the present invention has been described with reference to preferred embodiments, it will be understood by one skilled in the art that various modifications and variations can be made in the present invention without departing from the technical spirit and scope of the present invention.

## Claims

1. A gasket comprising a polybutylene terephthalate resin,
wherein the polybutylene terephthalate resin has a melt flow rate of 35 g/10min to 60 g/10min.

2. The gasket of claim 1, further comprising a glass fiber,
wherein the glass fiber is included in an amount of 15 to 50 parts by weight based on a total of 100 parts by weight of the polybutylene terephthalate resin.

3. The gasket of claim 2, wherein the glass fiber is included in an amount of 15 to 30 parts by weight based on the total of 100 parts by weight of the polybutylene terephthalate resin.

4. The gasket of claim 1, wherein the polybutylene terephthalate resin is a mixture of a first polybutylene terephthalate resin with a melt flow rate of 30 g/10min to 40 g/10min and a second polybutylene terephthalate resin with a melt flow rate of 70 g/10min to 80 g/10min.

5. The gasket of claim 4, wherein the second polybutylene terephthalate resin is included in an amount of 10 to 50 parts by weight based on the total of 100 parts by weight of the polybutylene terephthalate resin.

6. The gasket of claim 1, wherein the gasket has a specific gravity of 1.4 or greater.

7. The gasket of claim 1, wherein the gasket has a tensile strength of 900 Kgf/cm² or higher.

8. The gasket of claim 1, wherein the gasket has an IZOD impact strength of 4.0 Kg·cm/cm or higher.

9. The gasket of claim 1, wherein the gasket has a heat distortion temperature of 200°C or higher.

10. The gasket of claim 1, wherein the gasket is a crimping gasket that serves to seal a secondary battery while being in close contact with an opening portion of a can.

11. A cap assembly for a secondary battery adapted to be coupled to an opening portion of a can configured to accommodate an electrode assembly, the cap assembly comprising:
a top cap positioned in the opening portion;
a safety vent arranged below the top cap and surrounding an outer periphery of the top cap; and
the gasket of any one of claims 1 to 10 positioned on an outer periphery of the safety vent.

12. A secondary battery comprising:
an electrode assembly in such a form that a separator is arranged between a positive electrode and a negative electrode and the positive and negative electrodes and the separator are wound;
a can configured to accommodate the electrode assembly; and
the cap assembly of claim 11 coupled to an opening portion of the can.
